# EUROPEAN PATENT APPLICATION

(11) **EP 4 044 286 A1**
(43) Date of publication of application: **17.08.2022**
(21) Application number: 20883294.9
(22) Date of filing: 23.10.2020
(51) Int. Cl.: H01M 4/38, H01M 4/52

(54) **NEGATIVE ELECTRODE MATERIAL AND PREPARATION METHOD THEREFOR, LITHIUM ION BATTERY, AND TERMINAL**

(30) Priority: 30.10.2019 CN 201911064363
(71) Applicant: Huawei Technologies Co., Ltd., Shenzhen, Guangdong 518129 (CN)
(72) Inventor: SU, Hang, Shenzhen, Guangdong 518129 (CN); XU, Guocheng, Shenzhen, Guangdong 518129 (CN); WANG, Pinghua, Shenzhen, Guangdong 518129 (CN); LI, Yangxing, Shenzhen, Guangdong 518129 (CN)
(74) Representative: Gill Jennings & Every LLP
(86) International application number: PCT/CN2020/123050
(87) International publication number: WO 2021/083034

(57) **Abstract**

Embodiments of the present invention provide a negative electrode material, including a doped silicon-based material. The doped silicon-based material includes a silicon-based material and doping metal elements distributed inside particles of the silicon-based material. The silicon-based material includes nano-silicon or silicon monoxide. A doping amount of the doping metal elements ranges from 1 ppm to 1000 ppm. The negative electrode material is obtained by doping metal elements with an extreme low content into a crystal structure of the silicon-based material, to maintain stability of an original crystal structure of the silicon-based material while improving conducting performance of the silicon-based material. Therefore, an energy density of a cell can be effectively improved, and the silicon-based material is not prone to be pulverized in a charging/discharging process. The embodiments of the present invention further provide a production method of the negative electrode material, a lithium-ion battery, and a terminal.

## Description

This application claims priority to Chinese Patent Application No. 201911064363.0, filed with China National Intellectual Property Administration on October 30, 2019 and entitled "NEGATIVE ELECTRODE MATERIAL, PRODUCTION METHOD THEREOF, LITHIUM-ION BATTERY, AND TERMINAL", which is incorporated herein by reference in its entirety.

### TECHNICAL FIELD

Embodiments of the present invention relate to the field of lithium-ion battery technologies, and in particular, to a negative electrode material, a production method thereof, a lithium-ion battery, and a terminal.

### BACKGROUND

A specific capacity of a silicon material may reach 4200 mAh/g that is ten times higher than a specific capacity of a graphite negative electrode. Therefore, the silicon material is considered as a very promising negative electrode material for a lithium-ion battery. However, silicon belongs to a semiconductor and has a low conductivity that is only 1.56x10⁻³ S/m. This is not conducive to transmitting an electron. As a result, dynamic performance is poor, and a lithium insertion and extraction process of the material is affected. Specifically, a lithium extraction potential of a cell is high, and an energy density of the cell is affected. In addition, especially during high-rate charging/discharging, dynamic performance is poor. This easily causes lithium precipitation, causes performance deterioration, and even causes a safety problem.

To improve a conductivity of the silicon material, in the industry, a silicon alloy negative electrode material such as a ferrosilicon material is obtained through alloy. However, although the alloy greatly improves the conductivity of the silicon material, because an alloy is generated, both physical and chemical characteristics of the material are changed, for example, a particle of a silicon alloy material is large, a metallic phase exists in a crystal structure, and a metal attribute is prominent. Consequently, in a charging/discharging cycle process, a volume effect in an expansion/contraction process cannot be suppressed. Finally, the material is rapidly pulverized, and electrical performance is rapidly deteriorated.

### SUMMARY

In view of this, embodiments of the present invention provide a negative electrode material that includes a doped silicon-based material, where the doped silicon-based material is internally doped with metal elements with a low content, has high conducting performance, and can maintain stability of an original crystal structure of the silicon-based material, to resolve the following problem to an extent: An existing alloyed silicon-based negative electrode material cannot maintain stability of the original crystal structure of the silicon-based material while improving a conductivity of the material.

Specifically, a first aspect of embodiments of the present invention provides a negative electrode material, including a doped silicon-based material, where the doped silicon-based material includes a silicon-based material and doping metal elements distributed inside particles of the silicon-based material, the silicon-based material includes nano-silicon or silicon monoxide, and a doping amount of the doping metal elements ranges from 1 ppm to 1000 ppm.

In an implementation of the present invention, the doping metal elements include one or more of titanium, nickel, tungsten, iron, copper, manganese, cobalt, zinc, gallium, antimony, and germanium.

In an implementation of the present invention, a part of the doping metal elements replace silicon atoms in a crystal structure of the silicon-based material, and a part of the doping metal elements are distributed in lattice defects of the crystal structure of the silicon-based material.

In an implementation of the present invention, an alloy phase and a metallic phase do not exist in a crystalline phase structure of the doped silicon-based material.

In an implementation of the present invention, a particle diameter size of the nano-silicon ranges from 1 nm to 150 nm.

In an implementation of the present invention, a particle diameter size of the silicon monoxide ranges from 500 nm to 10 µm.

In an implementation of the present invention, the doping metal elements are evenly distributed inside the particles of the silicon-based material.

In an implementation of the present invention, a conductivity of the doped silicon-based material ranges from 10 S/m to 1.0x10⁴ S/m.

In an implementation of the present invention, the negative electrode material further includes a coating layer disposed on a surface of the doped silicon-based material.

In an implementation of the present invention, the coating layer includes a carbon coating layer and/or an organic polymer coating layer.

In an implementation of the present invention, the negative electrode material further includes another negative electrode active material, and the doped silicon-based material is composited with the another negative electrode active material to form a composite material.

In an implementation of the present invention, the negative electrode material includes a core including the doped silicon-based material and another negative electrode active material, and a coating layer that coats a surface of the core.

In an implementation of the present invention, the core includes the doped silicon-based material, graphite, and amorphous carbon, the amorphous carbon is filled between the graphite, and the doped silicon-based material is evenly distributed in the amorphous carbon.

The negative electrode material provided in the first aspect of embodiments of the present invention includes the doped silicon-based material. The doped silicon-based material is obtained by doping highly conductive metal elements with a specified amount (a mass ratio is one part per million to one thousandth) into crystal structures of primary particles of the silicon-based material, to improve a conductivity of the silicon-based material. Therefore, this can effectively reduce a lithium extraction potential, improve an output voltage of a whole battery, and improve an energy density of a cell. In addition, doping the metal elements with the specified amount does not greatly change the crystal structure of the silicon-based material, and does not greatly change a phase characteristic of the material, so that structural stability of the material can be well maintained, and the material is not prone to be pulverized in a charging/discharging process.

According to a second aspect, an embodiment of the present invention further provides a production method of a negative electrode material, including the following steps:
doping doping metal elements into particles of a silicon-based material by using a physical or chemical doping method, to obtain a doped silicon-based material, where the doped silicon-based material includes the silicon-based material and the doping metal elements distributed inside the particles of the silicon-based material, the silicon-based material includes nano-silicon or silicon monoxide, and a doping amount of the doping metal elements ranges from 1 ppm to 1000 ppm.

In an implementation of the present invention, the physical or chemical doping method includes one or more of an ion injection method, a ball milling method, a sanding method, and a chemical vapor deposition method.

In an implementation of the present invention, after the doping metal elements are doped into the particles of the silicon-based material by using the ion injection method, annealing processing is further performed.

In an implementation of the present invention, the production method further includes: producing a coating layer on a surface of the produced doped silicon-based material.

In an implementation of the present invention, the production method further includes: compositing the produced doped silicon-based material with another negative electrode active material to produce a composite material, and producing a coating layer on a surface of the composite material. A specific operation of compositing the produced doped silicon-based material with another negative electrode active material to produce a composite material may be: mixing and granulating the doped silicon-based material and the another negative electrode active material to produce a composite particle. In the composite particle, the doped silicon-based material and the another negative electrode active material are evenly distributed.

The production method provided in the second aspect of embodiments of the present invention has a simple process, is easy to control, and is suitable for industrial production.

According to a third aspect, an embodiment of the present invention further provides a lithium-ion battery, including a positive electrode plate, a negative electrode plate, a separator, and an electrolyte, where the negative electrode plate includes a negative electrode material, and the negative electrode material includes the negative electrode material according to the first aspect of the present invention.

An embodiment of the present invention further provides a terminal, including a terminal housing, and a circuit board and a battery that are located inside the terminal housing, where the battery includes the lithium-ion battery according to the third aspect of the present invention.

### BRIEF DESCRIPTION OF DRAWINGS

FIG. 1 is a schematic diagram of a structure of a lithium-ion battery according to an embodiment of the present invention;
FIG. 2 is a schematic diagram of a structure of a doped silicon-based material according to an embodiment of the present invention;
FIG. 3 is a schematic diagram of replacing a silicon atom with a doping metal element in a doped silicon-based material according to an embodiment of the present invention;
FIG. 4 is a schematic diagram of a structure of a negative electrode material according to an embodiment of the present invention;
FIG. 5 is a schematic diagram of a structure of a terminal according to an embodiment of the present invention;
FIG. 6 shows a scanning electron microscope (SEM) photograph of a germanium-doped silicon-based material according to Embodiment 3 of the present invention; and
FIG. 7 is a diagram of comparison between lithium extraction potential curves of cobalt-doped nano-silicon and cobalt-undoped nano-silicon according to Embodiment 1 of the present invention.

### DESCRIPTION OF EMBODIMENTS

The following describes embodiments of the present invention with reference to the accompanying drawings in embodiments of the present invention.

Embodiments of the present invention provide a negative electrode material, and the negative electrode material may be used to manufacture a negative electrode of a lithium-ion battery. The lithium-ion battery may be used in a terminal consumer product such as a mobile phone, a tablet computer, a portable computer, a notebook computer, and another wearable or movable electronic device.

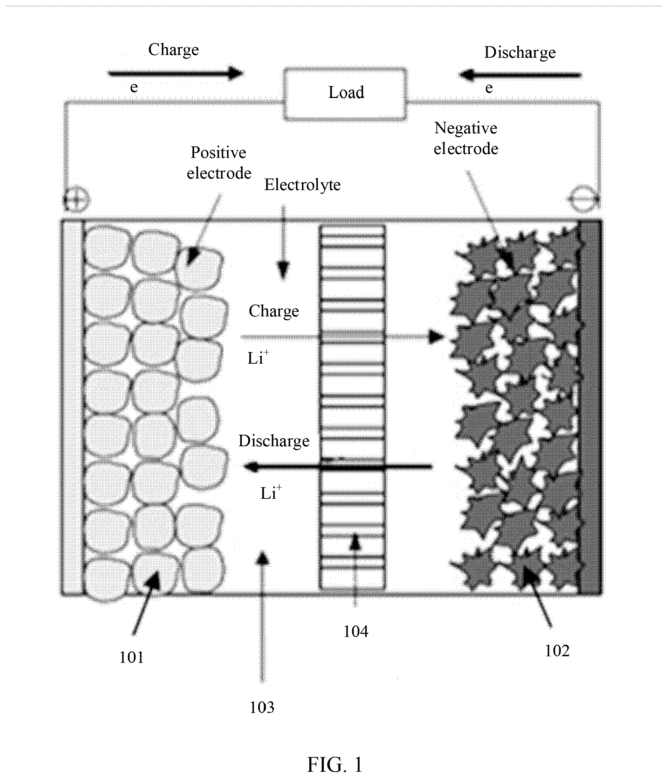

As shown in FIG. 1, core components of a lithium-ion battery include a positive electrode material 101, a negative electrode material 102, an electrolyte 103, a separator 104, and a corresponding connection auxiliary and loop. The positive electrode material 101 and the negative electrode material 102 may be used to insert/extract lithium ions to store and release energy. The electrolyte acts as a carrier for transmitting the lithium ion between a positive electrode and a negative electrode. The separator 104 may allow the lithium ion to pass through, but is not conductive, so that the positive electrode and the negative electrode are separated to avoid a short circuit. The positive and negative electrode materials play a decisive role in key performance of the lithium-ion battery, such as an energy storage function, an energy density of a cell, cycle performance, and safety performance.

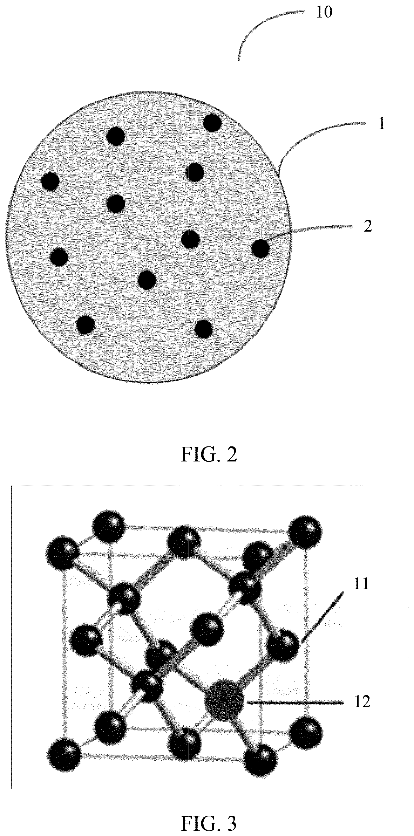

As shown in FIG. 2, a negative electrode material provided in an embodiment of the present invention includes a doped silicon-based material 10. The doped silicon-based material 10 includes a silicon-based material 1 and doping metal elements 2 distributed inside particles of the silicon-based material 1. A doping amount of the doping metal elements 2 ranges from 1 ppm to 1000 ppm.

Although the silicon-based material has a high specific capacity, the silicon-based material belongs to a semiconductor, has a low conductivity, and is not conducive to transmitting an electron. As a result, dynamic performance is poor, and a lithium extraction potential of a cell is high. In this embodiment of the present invention, metal elements that has a high conductivity are doped into the silicon-based material, so that a conductivity of the silicon-based material is effectively improved. In addition, a doping amount of the metal elements is controlled to be a low content, so that stability of an original crystal structure of the material is ensured while the conductivity of the material is improved. Finally, performance of the lithium-ion battery can be effectively improved.

In an implementation of the present invention, the silicon-based material 1 may be nano-silicon. In another implementation of the present invention, the silicon-based material 1 may be silicon monoxide. The nano-silicon and the silicon monoxide may be spherical, sphere-like, or acicular particles. The silicon monoxide may be specifically SiOₓ, where 0.3<x<1.7, and may be specifically SiO.

In an implementation of the present invention, the doping metal elements 2 are distributed inside primary particles of the silicon-based material, and may specifically replace silicon atoms in a crystal structure of the silicon-based material, to form metal-silicon bonds with adjacent silicon atoms, or may be distributed in lattice defects of a crystal structure of the silicon-based material. Specifically, in an implementation of the present invention, a part of the doping metal elements replace the silicon atoms in the crystal structure of the silicon-based material, and a part of the doping metal elements are distributed in the lattice defects of the crystal structure of the silicon-based material.

The doping metal elements are distributed in crystalline silicon cells or lattice defects. Therefore, in an implementation of the present invention, it is found, through XRD (X-ray diffraction, X-ray diffraction) detection, that an alloy phase and a metallic phase do not exist in a crystalline phase inside the doped silicon-based material. Therefore, in this embodiment of the present invention, according to the doped silicon-based material, an original structure of the silicon-based material is basically maintained while conducting performance of the silicon-based material is improved, so that structural stability of the material is ensured.

FIG. 3 is a schematic diagram of replacing a silicon atom with a doping metal element in a doped silicon-based material according to an embodiment of the present invention. As shown in the figure, in a face-centered cubic primitive cell including silicon atoms 11, four silicon atoms 11 are respectively located at 1/4 of four spatial diagonals. Doping metal element atoms 12 replace the silicon atoms 11 and enter crystalline silicon cells to form metal-silicon bonds, or exist in silicon-crystal defects and form no bond. However, the doping metal elements have an extremely low content, and are not sufficient to form a long-path ordered structure. Therefore, only a silicon phase or a silicon-oxygen phase exists in a crystalline phase of the material, and no alloy phase or metallic phase is generated. In this way, the original crystal structure of the silicon-based material is not greatly changed, and structural stability of the material can be better maintained. According to the doped silicon-based material in this embodiment of the present invention, the doping metal elements with an extremely low amount are doped, so that the conductivity of the silicon-based material can be greatly improved, a lithium extraction platform can be lowered, and an energy density and a power density of the cell can be improved. In addition, compared with an alloyed silicon-based material, the doped silicon-based material in this embodiment of the present invention has good structural stability, so that cycle performance of the battery can be improved.

In an implementation of the present invention, when a conductivity of the doping metal element, an impact on lithium insertion and extraction performance of the silicon-based material, a side effect risk, and the like are comprehensively considered, the doping metal elements may be selected as one or more of titanium (Ti), nickel (Ni), tungsten (W), iron (Fe), copper (Cu), manganese (Mn), cobalt (Co), zinc (Zn), gallium (Ga), antimony (Sb), and germanium (Ge). Specifically, for example, a cobalt-doped silicon-based material, an iron-doped silicon-based material, or a germanium-doped silicon-based material is formed.

In an implementation of the present invention, to obtain more stable material performance, the doping metal elements are evenly distributed inside the particles of the silicon-based material.

In some implementations of the present invention, a particle diameter size of the nano-silicon may range from 1 nm to 150 nm. In some other implementations of the present invention, a particle diameter size of the nano-silicon may range from 20 nm to 150 nm. In some other implementations of the present invention, a particle diameter size of the nano-silicon may range from 50 nm to 100 nm. The nano-silicon may be monocrystalline silicon, or may be polycrystalline silicon. The monocrystal silicon may be specifically P-type or N-type monocrystalline silicon.

In some implementations of the present invention, a particle diameter size of the silicon monoxide may range from 500 nm to 10 µm. In some other implementations of the present invention, a particle diameter size of the silicon monoxide may range from 1 µm to 8 µm. In some other implementations of the present invention, a particle diameter size of the silicon monoxide may range from 3 µm to 5 µm. Selecting a suitable particle diameter enables an expansion effect of the material to be well controlled, and enables processing performance of the material to be improved. A small particle diameter is conducive to alleviating the expansion effect.

In an implementation of the present invention, to improve stability of the material, the negative electrode material in this embodiment of the present invention may further include a coating layer disposed on a surface of the doped silicon-based material, and the coating layer may be a carbon coating layer and/or an organic polymer coating layer. In some embodiments, a material of the carbon coating layer may be specifically amorphous carbon formed by decomposing a carbon source, or a mixture of amorphous carbon and carbon nanotubes and/or graphene that are/is built in the amorphous carbon. A thickness of the coating layer may range from 5 nm to 50 nm, and further, may range from 10 nm to 20 nm. The coating layer can effectively alleviate the expansion effect of the silicon-based material, and can further avoid excessive surface side effects caused because an electrolyte is in direct contact with an active material, to reduce an irreversible capacity and a loss of lithium ions in the battery. The carbon coating layer may further improve an electronic conductivity of the material.

When the silicon-based material is nano-silicon, to improve stability of the negative electrode material, the negative electrode material in this embodiment of the present invention may further include another negative electrode active material. To be specific, a nano-doped silicon-based material is composited with another negative electrode active material to form a composite material, and a coating layer may be further disposed on a surface of the composite material. Specifically, in an implementation of the present invention, the nano-doped silicon-based material and the another negative electrode active material may be mixed to form a composite particle through granulating and sintering, and the nano-doped silicon-based material and the another negative electrode active material are evenly distributed in the composite particle. In another implementation of the present invention, the negative electrode material includes a core including the doped silicon-based material and the another negative electrode active material, and a coating layer that coats a surface of the core. The core may be the foregoing composite particle. The another negative electrode active material may be but is not limited to a carbon material such as graphite, graphene, carbon nanotubes, carbon fibers, amorphous carbon, and porous carbon; or may be metal oxides such as cobalt oxide, nickel oxide, and manganese oxide; or may be another usable negative electrode active material. The negative electrode material in this embodiment of the present invention may include one or more other negative electrode active materials. A specific limitation of the coating layer is as previously described, and details are not described herein again. Both the coating layer and the another negative electrode active material such as graphite may alleviate volume expansion of the silicon-based material, effectively avoid pulverization due to a great volume change in a lithium insertion and extraction process, and improve cycle performance of the material.

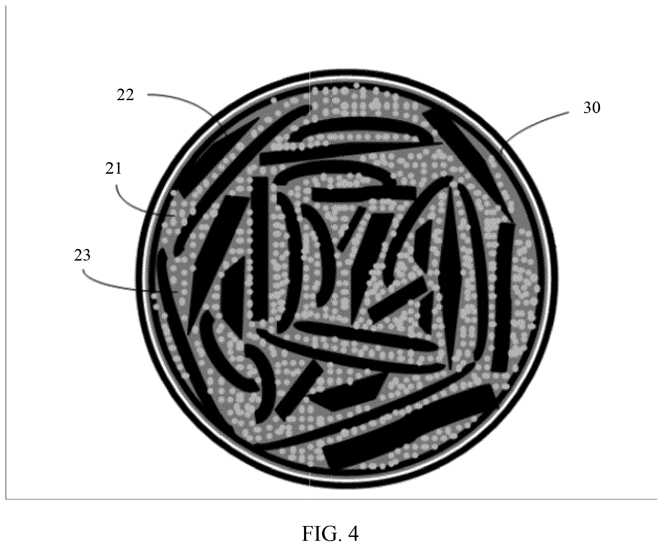

As shown in FIG. 4, in a specific implementation of the present invention, the negative electrode material includes doped nano-silicon 21, graphite 22, and a carbon coating layer 30 that coats the doped nano-silicon 21 and the graphite 22. The doped nano-silicon 21 and the graphite 22 are evenly distributed in space surrounded by the carbon coating layer 30. A thickness of the carbon coating layer may range from 5 nm to 20 nm. Specifically, in some implementations of the present invention, the thickness of the carbon coating layer ranges from 8 nm to 15 nm. In some other implementations of the present invention, amorphous carbon 23 may be further filled between the graphite 22, and the doped nano-silicon 21 is evenly distributed in the amorphous carbon 23. Introduction of the amorphous carbon enables the graphite and the doped nano-silicon to be connected together better, and can facilitate even distribution of the doped nano-silicon, so that expansion/contraction of silicon inside particles is more evenly distributed in a charging/discharging process. Therefore, this helps improve structural stability of the material.

Certainly, when the silicon-based material is silicon monoxide, the silicon-based material may be composited with the another negative electrode active material in the foregoing manner to form a composite material, and then a coating layer is disposed on a surface of the composite material.

In an implementation of the present invention, a conductivity of the doped silicon-based material ranges from 10 S/m to 1.0x10⁴ S/m, and specifically, may range from 1.0×10² S/m to 1.0x10⁴ S/m. Compared with a conductivity 1.56×10⁻³ S/m of a pure silicon material, the conductivity of the doped silicon-based material obtained by doping the metal elements is greatly improved. It may be understood that doped silicon-based materials in different embodiments of the present invention have different conductivities based on different types of doping metal elements and different doping amounts.

In an implementation of the present invention, the doping amount of the doping metal elements ranges from 1 ppm to 1000 ppm. Optionally, the doping amount of the doping metal elements may range from 50 ppm to 1000 ppm. Optionally, the doping amount of the doping metal elements may range from 200 ppm to 1000 ppm. Optionally, the doping amount of the doping metal elements may range from 500 ppm to 800 ppm. If the doping amount is larger, a doping process is better controlled, and the conductivity of the material is further improved. Therefore, when structural stability of the material is ensured, the doping amount may be relatively increased.

According to the negative electrode material provided in the foregoing embodiment of the present invention, the doped silicon-based material is obtained by doping metal elements with a low content (a mass ratio is one part per million to one thousandth) into crystal structures of the primary particles of the silicon-based material. Introduction of the doping metal elements improves the conductivity of the silicon-based material, effectively reduces the lithium extraction potential, and improves an output voltage of a whole battery and the energy density of the cell. In addition, doping the metal elements with the low content does not greatly change the crystal structure of the silicon material, and does not greatly change a phase characteristic of the material, so that structural stability of the material can be well maintained, and the material is not prone to be pulverized in the charging/discharging process.

Correspondingly, an embodiment of the present invention further provides a production method of the foregoing negative electrode material, including the following steps:

Doping metal elements are doped into particles of a silicon-based material by using a physical or chemical doping method, to obtain a doped silicon-based material, where the doped silicon-based material includes the silicon-based material and the doping metal elements distributed inside the particles of the silicon-based material, the silicon-based material includes nano-silicon or silicon monoxide, and a doping amount of the doping metal elements ranges from 1 ppm to 1000 ppm.

In an implementation of the present invention, the physical or chemical doping method includes one or more of an ion injection method, a ball milling method, a sanding method, and a chemical vapor deposition method. In the methods, the doping metal elements can enter crystalline silicon cells and replace silicon atoms to form bonds with other silicon atoms in the crystalline silicon cells; or the doping metal elements can exist in lattice defects.

In the ion injection method, doping atoms are first ionized into ions, and the doping ions are accelerated by using a strong electric field, to obtain doping ions that have high dynamic energy and that may directly enter a doped crystal. When an ion injection technology is used for doping, many lattice defects are generated in a crystal, and some atoms also exist in a gap. Therefore, after the ion injection, low-temperature annealing or laser annealing needs to be performed to eliminate these defects and activate the doping elements.

In an implementation of the present invention, production of metal-doped nano-silicon is used as an example. A specific operation of performing doping by using the ion injection method may be as follows: Monocrystalline silicon is provided, and doping metal elements are injected into the monocrystalline silicon by using specified injection energy. Next, annealing is performed by using a pulse laser. After annealing is completed, metal-doped nano-silicon with a target size is obtained through pulverization.

In this implementation of the present invention, when the ion injection method is used for doping, an amount of the injection energy may be set based on an actual requirement. For example, the amount may be 50 KeV to 100 KeV.

The ball milling/sanding method is a method for producing a new material by using mechanical energy to induce a chemical reaction or induce a change in tissue, a structure, and performance of a material. The method may significantly reduce reaction activation energy, refine a crystal grain, greatly improve powder activity, improve particle distribution evenness, promote diffusion of solid-state ions, and induce a low-temperature chemical reaction, so that density performance, electrical performance, and thermal performance, and the like of the material are improved. The method is an energy-saving and efficient material production technology.

In an implementation of the present invention, production of metal-doped silicon monoxide is used as an example. A specific operation of performing doping by using the ball milling method may be as follows: Silicon monoxide particles and metal-doped simple substance particles are provided, and are ball-milled for 4 to 10 hours in an inert atmosphere when a medium exists. After ball milling ends, the metal-doped silicon monoxide may be obtained through washing. The medium may be but is not limited to an organic solvent such as ethanol. The inert atmosphere may be nitrogen, helium, or the like. A particle diameter of the metal-doped simple substance particle may be but is not limited to 1 µm to 10 µm.

The chemical vapor deposition method is a method for producing a final product by performing a chemical reaction on a surface of a substrate by using a vapor phase compound or a simple substance that includes doping elements. In an implementation of the present invention, for example, a metal-doped silicon-based material is obtained through chemical vapor deposition on a surface of a substrate by using silane and a vapor phase metal compound (for example, GeH₄, SnH₄, and SbH₃) that includes doping metal elements.

An embodiment of the present invention further provides a lithium-ion battery, including a positive electrode plate, a negative electrode plate, a separator, and an electrolyte. The negative electrode plate includes a negative electrode active material, and the negative electrode active material includes the silicon negative electrode material described in the foregoing embodiment of the present invention.

In an implementation of the present invention, a coating layer may be further produced on a surface of the produced doped silicon-based material, to improve material performance. The coating layer may be a carbon coating layer and/or an organic polymer coating layer. Specifically, the carbon coating layer may be produced in the following manner: The doped silicon-based material is placed into an inert atmosphere furnace, an organic carbon source gas is introduced into the inert atmosphere furnace, and the carbon source is subject to a decomposition reaction at a temperature of 400°C to 1100°C, so that the carbon coating layer is formed on the surface of the doped silicon-based material. Certainly, solid-phase mixing carbon source coating, asphalt coating, hydrothermal reaction coating, bath oiling coating, or the like may be used. Alternatively, resin, saccharide, grease, organic acid, organic acid ester, small molecular alcohol, carbon nanotubes, graphene, or the like may be used. For the organic polymer coating layer, the doped silicon-based material is dispersed in a slurry system that includes an organic polymer, to form the coating layer through solidification.

In an implementation of the present invention, the produced doped silicon-based material may be further composited with another negative electrode active material based on a requirement, to produce a composite material, and a coating layer is further produced on a surface of the composite material. A method for forming the composite material may be specifically as follows: After being mixed, the doped silicon-based material and the another negative electrode active material are mixed, granulated, and sintered, to obtain a composite particle. A mixing method includes but is not limited to the ball milling method.

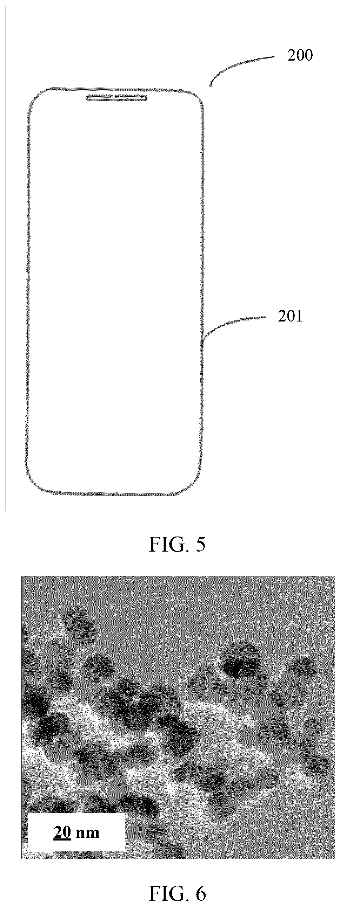

As shown in FIG. 5, an embodiment of the present invention further provides a terminal 200. The terminal 200 may be a mobile phone, or may be an electronic product such as a tablet computer, a notebook computer, a portable computer, and a smart wearable product. The terminal 200 includes a housing 201 assembled on an outer side of the terminal, and a circuit board and a battery (not shown in the figure) that are located inside the housing 201. The battery is the lithium-ion battery provided in the foregoing embodiment of the present invention. The housing 201 may include a front housing assembled on a front side of the terminal and a rear cover assembled on a rear side. The battery may be fastened to an inner side of the rear cover, to supply power to the terminal 200.

A plurality of embodiments of the present invention are described below.

### Embodiment 1

A production method of a Co-doped silicon negative electrode material includes the following steps:
(1) AP-type monocrystalline silicon sample with a thickness of 300 µm is used as a substrate, and cobalt elements are injected into the monocrystalline silicon sample at a dose of 5×10¹⁵ cm⁻² by using an ion injection method, where injection energy is 100 KeV.
(2) After injection, the sample is annealed (PLM) by using an Nb: YAG pulse laser, so that a decrystallized injection layer is crystallized, and the doping Co elements are activated. Annealing parameters are as follows: Pulse duration is 15 ns, single-pulse energy is 0.5 J/cm², and a laser wavelength is 532 nm.
(3) After the annealed sample is coarsely pulverized (a mortar may be used for pulverization in case of a small amount), the sample goes through a mesh net that has 80 meshes, and then is added to a pulverizer. A host frequency of the pulverizer range from 12 Hz to 15 Hz, a classifier frequency range from 34 Hz to 30 Hz, and a feeding speed is 5 Hz. After pulverization is completed, a final product is collected, to obtain the Co-doped silicon negative electrode material with a particle diameter of 100 nm.

### Embodiment 2

A production method of a Fe-doped silicon monoxide (SiO) negative electrode material includes the following steps:

SiO materials with a size of 10 µm and simple substance Fe particles with a size of 1 µm are mixed at a stoichiometric ratio of 10000:1, and are ball-milled for 4 hours in an inert atmosphere by using ethanol as a medium. An obtained product is washed by using 0.05 mol/L to 0.1 mol/L hydrochloric acid and deionized water, and then dried, to obtain the Fe-doped SiO negative electrode material with a particle diameter of 1 µm.

### Embodiment 3

A production method of a Ge-doped silicon negative electrode material includes the following steps:

A laser beam power is set to 57 W by using a chemical vapor deposition-laser pyrolysis device. In a nitrogen atmosphere, SiH₄ gas and GeH₄ gas are introduced into a reaction chamber at a molar ratio of 999:1 for reaction. As shown in FIG. 6, after the reaction ends, a Ge-doped Si-nano particle with a particle diameter of 20 nm is collected.

The chemical vapor deposition-laser pyrolysis device includes a CO₂ laser (a maximum power is 60 W, and an operating wavelength is 10.6 µm), a reaction chamber, a gas supply system (including a supply pipeline and a mass flow controller (MFC)), an NPs collector, and gas.

A conductivity test is performed on the metal-doped negative electrode materials produced in Embodiments 1 to 3 of the present invention, and a silicon-based material that is not doped with metal elements is used as a control group. A test result is shown in Table 1:

**Table 1**

| | | Doping amount | Conductivity (before doping) | Conductivity (after doping) |
|---|---|---|---|---|
| Embodiment 1 | Co-doped Si | 200 ppm | 1.56x10⁻³ S/m | 690 S/m |
| Embodiment 2 | Fe-doped SiO | 60 ppm | 8.0 S/m | 130 S/m |
| Embodiment 3 | Ge-doped Si | 920 ppm | 1.56x10⁻³ S/m | 2600 S/m |

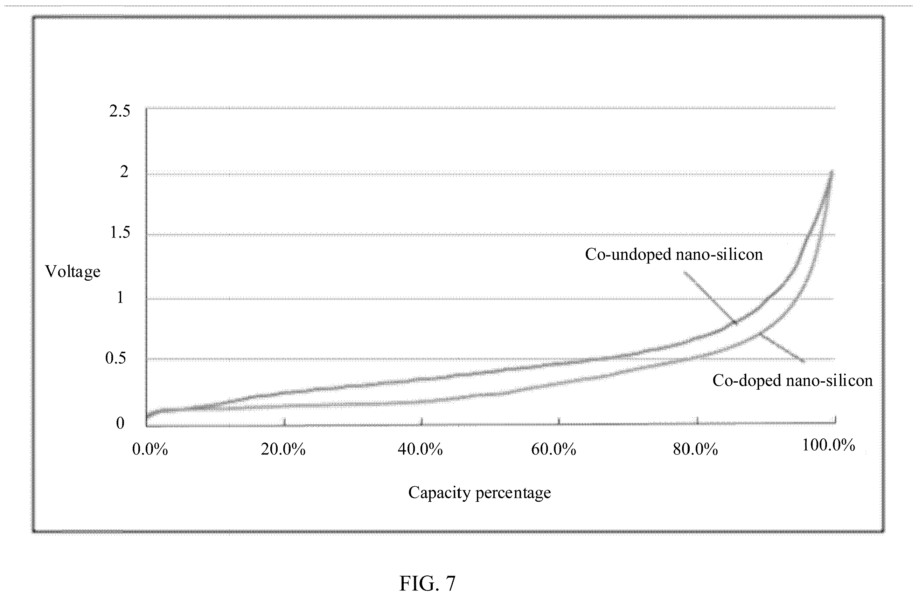

It may be learned from the test result in Table 1 that the conductivity of the silicon-based material is significantly improved after the metal elements are doped, and an improvement of the conductivity indicates that the doping succeeds. The improvement of the conductivity of the material can effectively reduce a lithium extraction potential, improve an output voltage of a whole battery, and improve an energy density of a cell. FIG. 7 shows a diagram of comparison between lithium extraction curves of the Co-doped nano-silicon material produced in Embodiment 1 of the present invention and a nano-silicon material that is not doped with the cobalt elements. As shown in FIG. 7, compared with the nano-silicon material that is not doped with the cobalt elements, a lithium extraction potential of the nano-silicon material doped with the metallic cobalt elements in this embodiment of the present invention is effectively reduced.

## Claims

1. A negative electrode material, comprising a doped silicon-based material, wherein the doped silicon-based material comprises a silicon-based material and doping metal elements distributed inside particles of the silicon-based material, the silicon-based material comprises nano-silicon or silicon monoxide, and a doping amount of the doping metal elements ranges from 1 ppm to 1000 ppm.

2. The negative electrode material according to claim 1, wherein the doping metal elements comprise one or more of titanium, nickel, tungsten, iron, copper, manganese, cobalt, zinc, gallium, antimony, and germanium.

3. The negative electrode material according to claim 1, wherein a part of the doping metal elements replace silicon atoms in a crystal structure of the silicon-based material, and a part of the doping metal elements are distributed in lattice defects of the silicon-based material.

4. The negative electrode material according to claim 3, wherein an alloy phase and a metallic phase do not exist in a crystalline phase structure of the doped silicon-based material.

5. The negative electrode material according to claim 1, wherein a particle diameter size of the nano-silicon ranges from 1 nm to 150 nm.

6. The negative electrode material according to claim 1, wherein a particle diameter size of the silicon monoxide ranges from 500 nm to 10 µm.

7. The negative electrode material according to claim 1, wherein the doping metal elements are evenly distributed inside the particles of the silicon-based material.

8. The negative electrode material according to claim 1, wherein a conductivity of the doped silicon-based material ranges from 10 S/m to 1.0x10⁴ S/m.

9. The negative electrode material according to claim 1, wherein the negative electrode material further comprises a coating layer disposed on a surface of the doped silicon-based material.

10. The negative electrode material according to claim 9, wherein the coating layer comprises a carbon coating layer and/or an organic polymer coating layer.

11. The negative electrode material according to claim 1, wherein the negative electrode material further comprises another negative electrode active material, and the doped silicon-based material is composited with the another negative electrode active material to form a composite material.

12. The negative electrode material according to claim 11, wherein the negative electrode material comprises a core doped with silicon-based material and the another negative electrode active material, and a coating layer that coats a surface of the core.

13. The negative electrode material according to claim 12, wherein the core comprises the doped silicon-based material, graphite, and amorphous carbon, the amorphous carbon is filled between the graphite, and the doped silicon-based material is evenly distributed in the amorphous carbon.

14. A production method of a negative electrode material, comprising the following steps:
doping doping metal elements into particles of a silicon-based material by using a physical or chemical doping method, to obtain a doped silicon-based material, wherein the doped silicon-based material comprises the silicon-based material and the doping metal elements distributed inside the particles of the silicon-based material, the silicon-based material comprises nano-silicon or silicon monoxide, and a doping amount of the doping metal elements ranges from 1 ppm to 1000 ppm.

15. The production method according to claim 14, wherein the physical or chemical doping method comprises one or more of an ion injection method, a ball milling method, a sanding method, and a chemical vapor deposition method.

16. The production method according to claim 14, wherein after the doping metal elements are doped into the particles of the silicon-based material by using the ion injection method, annealing processing is further performed.

17. The production method according to claim 14, further comprising: producing a coating layer on a surface of the produced doped silicon-based material.

18. The production method according to claim 14, further comprising: compositing the produced doped silicon-based material with another negative electrode active material to produce a composite material, and producing a coating layer on a surface of the composite material.

19. A lithium-ion battery, comprising a positive electrode plate, a negative electrode plate, a separator, and an electrolyte, wherein the negative electrode plate comprises a negative electrode material, and the negative electrode material comprises the negative electrode material according to any one of claims 1 to 13.

20. A terminal, comprising a terminal housing, and a circuit board and a battery that are located inside the terminal housing, wherein the battery comprises the lithium-ion battery according to claim 19.
